# FASCICULE DE BREVET EUROPEEN

(11) **EP 2 405 238 B1**
(45) Date de publication et mention de la délivrance du brevet: **10.08.2016**
(21) Numéro de dépôt: 11170345.0
(22) Date de dépôt: 17.06.2011
(51) Int. Cl.: G01C 19/56

(54) **Capteur inertiel de rotations à disque oscillant**
Trägheitssensor zum Erfassen der Drehbewegungen einer oszillierenden Scheibe
Vibrating disk inertial rotary motion sensor

(30) Priorité: 07.07.2010 FR 1055492
(43) Date de publication de la demande: 11.01.2012
(73) Titulaire: COMMISSARIAT A L'ENERGIE ATOMIQUE ET AUX ENERGIES ALTERNATIVES, 75015 Paris (FR)
(72) Inventeur: Walther, Arnaud, 38000 Grenoble (FR); Robert, Philippe, 38000 Grenoble (FR)
(74) Mandataire: Decobert, Jean-Pascal

(56) Documents cités:
- EP-A1- 2 065 713
- EP-A2- 2 008 965
- US-A- 5 955 668
- US-B1- 6 321 598
- PH ROBERT ET AL: "M&NEMS: A new approach for ultra-low cost 3D inertial sensor", SENSORS, 2009 IEEE, IEEE, PISCATAWAY, NJ, USA, 25 octobre 2009 (2009-10-25), pages 963-966, XP031618603, ISBN: 978-1-4244-4548-6

## Description

La présente invention concerne généralement les capteurs inertiels de type gyroscope ou gyromètre et plus particulièrement ceux dits oscillants capables de détecter, selon un ou plusieurs axes, les très faibles forces de Coriolis engendrées par les mouvements rotationnels que ces capteurs subissent.

La fabrication à très faible coût de capteurs inertiels de type gyroscope ou gyromètre a fait appel depuis longtemps à toutes les technologies qui ont été mises en oeuvre au cours des décennies passées par l'industrie de la microélectronique pour la production de masse de circuits intégrés d'abord et de micro systèmes électromécaniques ensuite. Micro systèmes plus connus sous l'acronyme MEMS de l'anglais « Micro Electro-Mechanical Systems ». Basé essentiellement sur l'utilisation du silicium pour ses propriétés de semi-conducteur, et aussi, avec les MEMS, pour ses qualités mécaniques, l'emploi de ces technologies a conduit à la fabrication de capteurs inertiels dits plans. Fabriqués à partir d'un substrat, ils sont en effet formés dans un seul plan, à la surface de ce dernier, à l'aide des moyens et méthodes des technologies de la microélectronique, notamment dépôts ou croissance de matériaux divers en couches multiples, photolithographie pour définir les motifs et gravure de ces motifs.

De très nombreux procédés et structures de capteurs inertiels plans ont été proposés. Le brevet américain 5,955,668 est caractéristique du type de capteurs qui peut être produit en utilisant les technologies de la microélectronique. Composé de deux masses planes, les forces de Coriolis sont transmises à un disque intérieur dont le balancement autour d'un axe d'ancrage doit être détecté pour mesurer les caractéristiques de la rotation à laquelle le capteur est soumis (amplitude, vitesse, etc.).

La précision de la détection des forces de Coriolis, qui sont faibles, est un facteur de qualité primordial pour ces capteurs. Traditionnellement, pour le type de capteurs plans décrit par le brevet ci-dessus, la mesure du balancement et, en général, du mouvement ou de la déformation de la partie du capteur soumise aux forces de Coriolis dans d'autres mises en oeuvre similaires, se fait par la mesure de la variation de capacité électrique entre des électrodes en mouvement. Cette mesure d'une capacité très faible, avec des variations encore plus faibles, est très délicate à réaliser avec précision. Valeurs d'autant plus faibles que la miniaturisation des capteurs est plus poussée. Par ailleurs les mouvements à détecter se font généralement hors plan ce qui complique le placement et la réalisation des électrodes de l'élément capacitif à mesurer. De plus, de nombreux facteurs sont susceptibles de perturber la mesure : mouvements parasites induits par le système d'excitation du capteur (oscillation d'une première masse destinée à créer le moment cinétique angulaire) ; couplage électrique pouvant exister entre deux voire trois voies de détection.

C'est donc un objet de l'invention que d'améliorer les capteurs inertiels plans du type décrit ci-dessus afin de maintenir voire d'augmenter leur sensibilité et/ou leur simplicité de mise en oeuvre alors même que leur miniaturisation est toujours plus poussée.

A cet effet, l'invention a trait à un micro-capteur inertiel de mouvement de rotation pour la détection d'un mouvement rotationnel autour d'un axe dit de rotation, comportant une partie mobile par rapport à une partie fixe, la partie mobile comprenant une masse d'excitation configurée pour subir un mouvement d'oscillation autour d'un axe dit d'excitation par des moyens d'excitation de sorte à générer une force de Coriolis induite par le mouvement rotationnel, une masse de détection cinématiquement reliée à la masse d'excitation par des moyens de liaison configurés pour transmettre au moins en partie la force de Coriolis et pour ne pas transmettre au moins en partie le mouvement d'oscillation autour de l'axe d'excitation et ayant un degré de liberté en rotation autour d'un axe dit d'oscillation, perpendiculaire à l'axe de rotation, des moyens de détection configurés pour mesurer la force de Coriolis transmise à la masse de détection, caractérisé en ce que les moyens de détection comportent au moins une jauge de contrainte suspendue entre la masse de détection et une partie d'ancrage solidaire de la partie fixe.

Préférentiellement au moins une des jauges de contrainte est une jauge piézorésistive.

On entend par « suspendue » que la (ou les) jauge(s) est connectée à ses deux extrémités ou à proximité de ces extrémités mais qu'au moins une partie de sa longueur reste libre et sans contact avec l'un ou l'autre de l'élément de détection et de la partie fixe. La jauge dite « suspendue » est maintenue en deux parties dites parties d'extrémités. La partie de la jauge, dite partie centrale, disposée entre ces deux parties d'extrémités est de longueur non nulle et n'est en contact avec aucun autre élément mobile ou fixe et notamment aucun des éléments parmi ceux composant le capteur.

Préférentiellement, cette jauge est de forme allongée suivant une direction, et de longueur, dite longueur de la jauge, grande dans cette direction (devant chaque dimension mesurée dans une section perpendiculaire à ladite direction). Elle est maintenue en deux parties d'extrémités qui sont chacune de longueur faible ou très faible devant la longueur de la jauge ou de sa partie centrale. Ces deux parties d'extrémité peuvent simplement être les bordures de la jauge.

La jauge peut avoir la forme d'une poutre ou poutrelle par exemple de section rectangulaire ou carrée dont l'épaisseur est orientée selon l'axe d'excitation.

En cas d'emploi de plusieurs jauges, elles peuvent être identiques ou non. Préférentiellement, au moins l'une d'entre elles présente la forme et/ou l'orientation caractéristique correspondante à l'un des modes de réalisation ici décrits.

Ce choix de jauges avantageusement piézo résistives associé à une configuration d'implantation spécifique, en suspension, procure des résultats avantageux en terme de détection.

Suivant une possibilité préférée, au moins une jauge avantageusement piézo résistive est reliée à la masse de détection à un niveau de hauteur, suivant l'axe d'excitation, différent de celui de l'axe d'oscillation de la masse de détection lorsque celle-ci est soumise à une force de Coriolis. Avantageusement, la partie fixe comporte un substrat à partir duquel est réalisée tout ou partie de la partie mobile et la jauge de contrainte s'étend dans un plan parallèle au plan du substrat, dans une direction parallèle à l'axe de la rotation à mesurer mais orthogonale à celle du mouvement de la masse de détection. On peut ainsi ajuster au mieux l'emplacement de la jauge pour une détection optimale. Par ailleurs, la force de Coriolis est induite par un mouvement de rotation situé dans le plan du substrat.

Par ailleurs, avantageusement, la masse de détection est superposée à la partie fixe suivant l'axe d'excitation et comporte une face interne en vis-à-vis d'une face de la partie fixe, la jauge étant localisée dans le prolongement de la face interne. Suivant ces cas, la jauge peut aisément être intégrée au reste du capteur lors de la fabrication, notamment par une couche mince dans laquelle est formée la jauge au cours d'étapes de lithographie.

Préférentiellement, le capteur comporte une masse mobile intermédiaire reliée à la masse d'excitation de sorte à subir au moins partiellement le mouvement d'oscillation autour de l'axe d'excitation de la masse d'excitation et la force de Coriolis, reliée à la masse de détection de sorte à transmettre au moins partiellement la force de Coriolis et à être mobile en rotation solidairement de la masse de détection suivant le mouvement d'oscillation généré par la force de Coriolis. Ce découplage optimisé permis par cette masse intermédiaire limite les contraintes parasites qui pourraient être imposées à la jauge. On réduit ainsi les risques de rupture et on peut affiner la jauge de sorte à concentrer les contraintes sur sa section, réduite, si bien que la sensibilité est accrue.

D'autres caractéristiques optionnelles pouvant être cumulées ou utilisées alternativement sont citées ci-après. Notamment, certains aspects avantageux portent sur la localisation de la ou les jauges pour optimiser la détection. Le micro-capteur peut ainsi être tel que :
- au moins une jauge de contrainte est une jauge piezorésistive,
- la au moins une jauge de contrainte est reliée à la masse de détection à un niveau de hauteur, suivant l'axe d'excitation, différent de celui de l'axe d'oscillation de la masse de détection,
- la partie fixe comporte un substrat à partir duquel est réalisée tout ou partie de la partie mobile, la jauge de contrainte s'étendant dans un plan parallèle au plan du substrat, dans une direction parallèle à l'axe de rotation,
- la masse de détection est superposée à la partie fixe suivant l'axe d'excitation et comporte une face interne en vis-à-vis d'une face de la partie fixe, la jauge de contrainte étant localisée dans le prolongement de la face interne,
- une masse mobile intermédiaire est reliée à la masse d'excitation de sorte à subir au moins partiellement le mouvement d'oscillation autour de l'axe d'excitation et la force de Coriolis, reliée à la masse de détection de sorte à transmettre au moins partiellement la force de Coriolis et à être mobile en rotation solidairement de la masse de détection suivant son axe d'oscillation,
- la jauge de contrainte est suspendue à la partie d'ancrage solidaire de la partie fixe par l'intermédiaire d'un contact électrique individuel,
- la masse de détection comporte un trou au droit duquel est suspendue la au moins une jauge de contrainte,
- la masse de détection présente une symétrie axiale suivant l'axe d'excitation, le trou étant localisé au centre de la masse de détection,
- la masse de détection comporte une série de poutres comportant au moins une poutre faisant saillie vers l'intérieur du trou et à laquelle est reliée la jauge de contrainte,
- la poutre est orientée suivant l'axe d'oscillation de la masse de détection,
- la masse de détection comporte une deuxième jauge de contrainte reliée à la poutre en symétrie de la première jauge de contrainte par rapport à l'axe d'oscillation de la masse de détection,
- la série de poutres comporte une deuxième poutre pour former une paire de poutres et comprenant au moins une jauge de contrainte reliée à la deuxième poutre, ladite deuxième poutre et ladite au moins une jauge étant symétriques respectivement de la première poutre et de la au moins une jauge de contrainte reliée à la première poutre, selon l'axe de symétrie de la masse de détection,
- la masse d'excitation et l'élément de détection sont configurées pour générer et transmettre une deuxième force de Coriolis induite par un mouvement rotationnel autour d'un deuxième axe de rotation perpendiculaire à l'axe de rotation, le micro-capteur comportant des deuxièmes moyens de détection configurés pour mesurer la deuxième force de Coriolis transmise à la masse de détection, la masse de détection ayant un degré de liberté en rotation autour d'un deuxième axe dit d'oscillation,
- la masse intermédiaire a un degré de liberté en rotation autour du deuxième axe dit d'oscillation,
- la masse de détection comporte une deuxième série de poutres tournée de 90° par rapport à la première série de poutres autour du point d'intersection des premier et deuxième axes d'oscillation de la masse de détection et les deuxièmes moyens de détection comportent des jauges piézo résistives tournées de 90° par rapport aux jauges piézo résistives des premiers moyens de détection autour du point d'intersection des premier et deuxième axes d'oscillation de la masse de détection,
- la masse d'excitation entoure la masse de détection,
- le dispositif comporte une masse additionnelle reliée à la masse d'excitation de sorte à présenter un mouvement de vibration suivant une direction perpendiculaire à l'axe d'excitation et de sorte à générer une force de Coriolis induite par un mouvement de rotation de la masse additionnelle suivant l'axe d'excitation, des moyens de détection additionnels configurés pour mesurer la force de Coriolis induite par un mouvement de rotation de la masse additionnelle suivant l'axe d'excitation,
- la masse additionnelle présente deux parties réalisées symétriquement par rapport à l'axe d'excitation, les moyens de détection additionnels coopérant avec les deux parties de la masse additionnelle pour opérer une mesure différentielle de la force de Coriolis induite par le mouvement de rotation de la masse additionnelle suivant l'axe d'excitation,
- chaque partie de la masse additionnelle comporte une portion configurée pour subir le mouvement de vibration et une portion ancrée à la partie fixe de sorte à ne pas subir le mouvement de vibration, les deux parties étant reliées par un bras, les moyens de détection additionnels comportant au moins une jauge de contrainte sur chaque bras,
- le dispositif consiste en un système micro électromécanique,
- la au moins une jauge de contrainte comprend une strate de matériau électriquement conducteur ayant des propriétés piézo résistives,
- la strate de matériau est obtenue par gravage dans une couche de matériau et au moins un organe électriquement conducteur est aussi obtenu par gravage dans ladite couche de matériau.

Les buts, objets, ainsi que les caractéristiques et avantages de l'invention ressortiront mieux de la description détaillée de modes de réalisation de cette dernière qui peuvent être combinés et sont illustrés par les dessins d'accompagnement non limitatifs suivants dans lesquels :
- La figure 1 illustre une première mise en oeuvre dans laquelle un capteur inertiel selon l'invention est composé de trois masses distinctes qui permettent une détection des forces de Coriolis générées selon deux axes de rotation orthogonaux à l'aide de jauges piézorésistives.
- La figure 2 est une vue en plan d'un capteur inertiel à trois masses sismiques selon l'invention.
- La figure 3 montre une vue agrandie d'un jeu de peignes d'actionnement électrostatique servant à communiquer un mouvement oscillant d'excitation à une couronne extérieure constituant la première masse du capteur.
- La figure 4 est une vue agrandie en plan d'un ressort permettant le mouvement oscillant d'excitation de la couronne extérieure.
- La figure 5 est une vue agrandie des moyens de liaison avec l'un des ressorts conçus pour transmettre le mouvement d'oscillation autour de l'axe d'excitation à une couronne intermédiaire constituant la deuxième masse du capteur.
- La figure 6 est une vue agrandie d'une partie d'une couronne centrale constituant la troisième masse du capteur, de ses liaisons avec la couronne intermédiaire et de ses points d'ancrage.
- La figure 7 est une vue en coupe d'une paire de jauges piézorésistives destinées à mesurer les forces de Coriolis.
- Les figures 8a à 8g décrivent les étapes principales d'un procédé de réalisation de MEMS compatible avec la fabrication de capteurs inertiels selon l'invention.
- Les figures 9a à 9c décrivent les étapes supplémentaires d'un procédé de réalisation de MEMS qui permettent d'obtenir des épaisseurs différentes pour la réalisation des parties mécaniques.
- Les figures 10a et 10b envisagent des variantes de mise en oeuvre d'un capteur inertiel selon l'invention.
- Les figures 11a à 11f décrivent une variante à trois axes de détection de l'invention.

Les dessins joints sont donnés à titre d'exemples et ne sont pas limitatifs de l'invention.

Le capteur de l'invention comporte une partie fixe telle une partie d'un substrat employé dans les technologies MEMS. Une autre partie, dite partie mobile, est montée relativement à la partie fixe de sorte à lui préserver des libertés de mouvements qui seront détaillées plus loin. La partie mobile forme la portion du capteur où une pseudo force de Coriolis est créée sous condition d'excitation en cas de rotation selon un axe suivant lequel on souhaite opérer la détection.

D'une manière générale, on appelle axe de rotation, l'axe du mouvement de rotation à détecter. La détection met en oeuvre un mouvement d'oscillation autour d'un axe d'excitation. Le fonctionnement du capteur engendre une tendance à opérer un mouvement de rotation, induit, selon un axe servant à la détection. Il est ici généralement appelé axe d'oscillation et est perpendiculaire à l'axe de rotation du mouvement à détecter.

Pour une détection selon un axe de rotation (X par exemple), l'axe d'excitation est référencé (Z) et l'axe d'oscillation est l'axe (Y),. Pour un mouvement à détecter suivant l'axe (Y), l'axe d'excitation est (Z) et l'axe d'oscillation est l'axe (X). La jauge de contrainte sert à détecter la rotation autour de l'axe d'oscillation.

Dans les exemples qui suivent, un organe de la partie mobile est un élément d'excitation sous forme d'une première masse subissant une excitation. Un autre organe est un élément de détection sous forme d'une autre masse. Un mode de réalisation préféré de l'invention associe une troisième masse, intermédiaire, aux précédentes bien que ce cas ne soit pas limitatif.

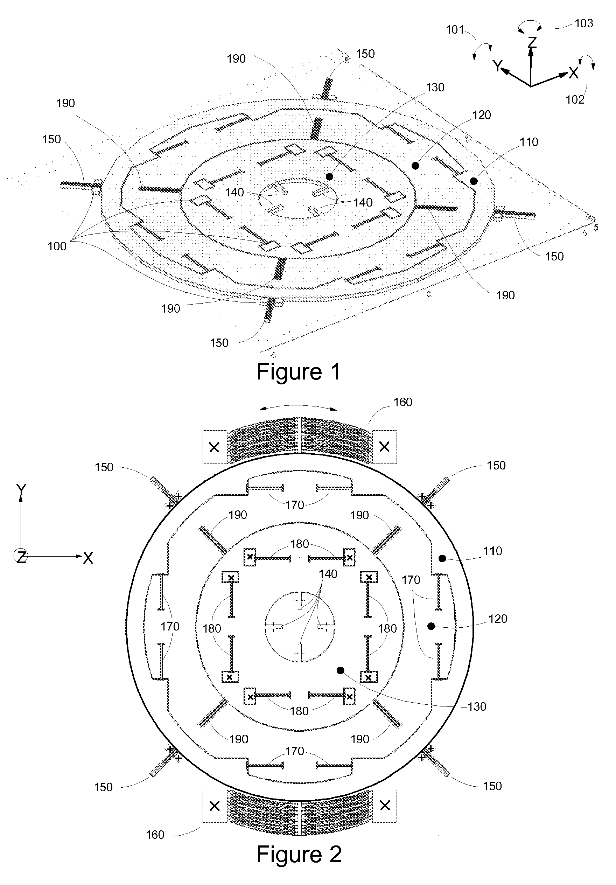

La **figure 1** illustre une première mise en oeuvre de l'invention dans laquelle un capteur inertiel est composé de trois masses sismiques distinctes permettant une détection des forces de Coriolis générées selon deux axes orthogonaux de rotation du capteur et se situant dans le plan du substrat. L'agencement des trois masses avec l'utilisation de jauges piézorésistives suspendues assure un découplage complet des mouvements oscillants d'excitation du capteur qui ne sont pas transmis aux jauges afin qu'elles puissent mesurer précisément les seuls mouvements de compression et d'extension (ou traction) auxquelles elles sont soumises par les forces de Coriolis résultant des rotations du capteur selon les deux axes possibles de détection.

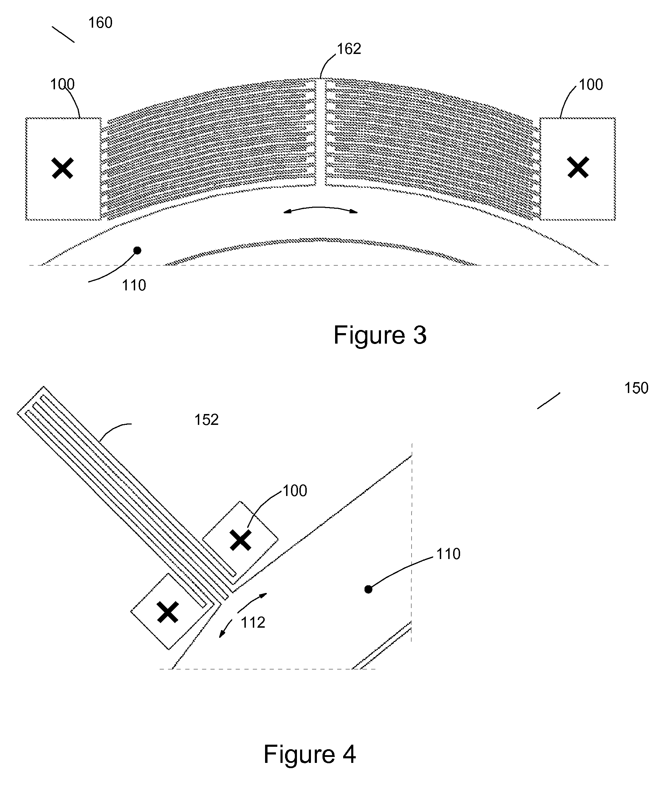

La figure 1 est une vue en perspective du capteur inertiel plan de cette première mise en oeuvre de l'invention. Les différents mouvements des trois masses du capteur sont décrits ci-après selon le système référentiel tridimensionnel classique dans lequel le plan du capteur est ici défini par les axes notés X et Y. La troisième dimension, hors plan, est l'axe Z. L'énergie cinétique d'excitation est communiquée au capteur sous forme d'oscillations dans le plan XY, autour de l'axe Z, comme indiqué au repère 103. L'élément d'excitation est une première masse qui reçoit cette excitation par des moyens classiques dont un exemple est donné plus loin. La première masse prend dans cet exemple la forme d'une couronne extérieure 110 qui est rendue libre d'osciller dans le seul plan XY autour de l'axe Z par les ressorts 150, ici au nombre de quatre. Les ressorts 150 sont conçus pour donner à la première masse un seul degré de liberté de mouvement, en rotation, autour de l'axe Z 103. Par rapport à la partie fixe, ces ressorts sont décrits plus précisément dans la figure 4.

Le mouvement d'excitation oscillant du capteur est transmis à la couronne intermédiaire 120 constituant une autre masse. Elle est rigidement liée à la couronne extérieure selon le mouvement d'excitation et a donc aussi un mouvement autour de l'axe Z. Des ressorts gravés dans le plan de la couronne intermédiaire, décrits ci-après, confèrent cependant à celle-ci deux degrés supplémentaires de liberté de mouvement en oscillation autour des axes X 102 et Y 101.

Une autre masse, sous forme de couronne centrale 130 est quant à elle ancrée en rotation selon Z et ne peut donc suivre les mouvements oscillants d'excitation communiqués aux couronnes extérieure 110 et intermédiaire 120. Elle ne peut donc être sensible qu'aux mouvements résultants des forces de Coriolis et a donc à cet effet deux degrés de liberté de mouvement en oscillation autour des axes X et Y avec les moyens décrits dans les figures suivantes ; les mouvements dus à la force de Coriolis sont transmis par les ressorts 190. La couronne centrale 130 et la couronne extérieure 110, qui ne sont pas libres de tous leurs mouvements, ont des points d'ancrage à un substrat fixe dont certains 100 sont désignés sur la figure 1. Ils sont décrits et indiqués plus précisément ci-après.

Les mouvements de contrainte sont transmis aux jauges piézo résistives, ici par quatre poutres 140 disposées à la périphérie intérieure de la couronne centrale 130 formant ainsi un élément de détection des oscillations selon les deux axes X et Y au niveau d'un trou 147.

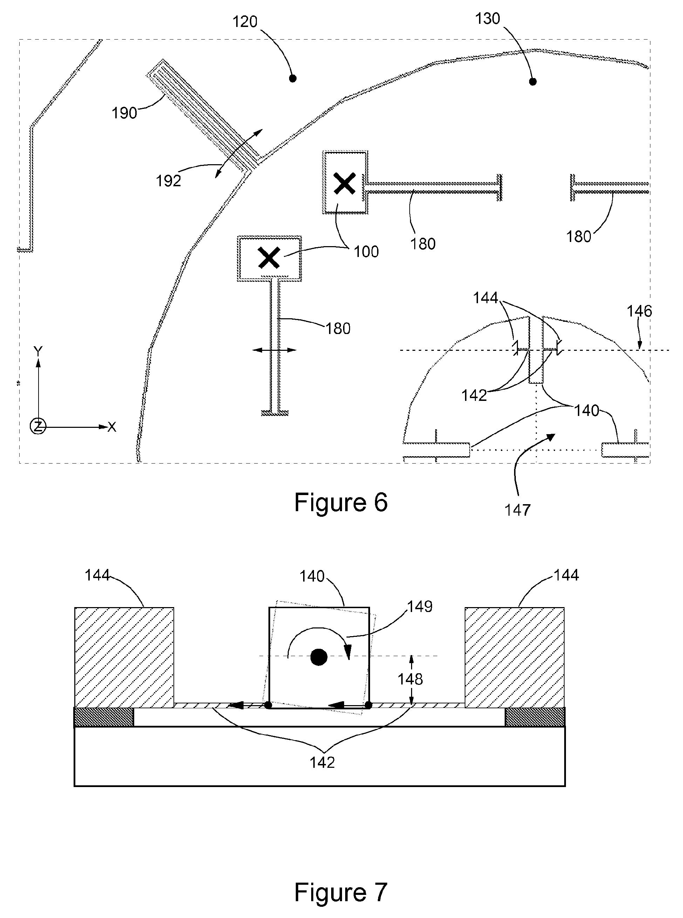

Préférentiellement, l'épaisseur (suivant la direction Z, mais de préférence aussi la largeur orthogonale à la direction du mouvement rotationnel à détecter) de la ou des jauges est comprise entre quelques 10 nm et quelques micromètres, par exemple 1 µm ou 2 µm ou 10 µm. Un exemple d'épaisseur est de 40nm pour une jauge de contrainte suspendue en silicium cristallin. De préférence, l'épaisseur e est très petite devant d (e<<d, soit e<d/10 ou e<d/20) d étant la distance entre l'axe d'oscillation de la masse de détection 130, 230 suivant la direction du mouvement rotationnel comme illustré au repère 148 en figure 7 et son plan inférieur en vis-à-vis du substrat.

La mesure en différentiel peut se faire, pour chaque paire de jauges, au moyen d'un pont de Wheatstone.

La **figure 2** est une vue dans le plan XY du capteur inertiel à trois masses sismiques selon la figure 1. On retrouve sur cette figure les trois masses sous forme de couronnes concentriques 110, 120 et 130 décrites ci-dessus. Le mouvement d'oscillation est dans cet exemple communiqué à la couronne extérieure 110 par un jeu de deux peignes d'actionnement électrostatique 160. Le mouvement est classiquement obtenu par l'application d'une tension continue entre les deux peignes, tension continue à laquelle on surimpose une tension alternative correspondant à la fréquence d'excitation désirée du capteur inertiel afin de lui communiquer l'énergie cinétique nécessaire qui permettra le développement des forces de Coriolis lorsque le capteur est lui-même mis en rotation. On peut utiliser des fréquences typiques : 2-20kHz, les tensions variant en fonction du facteur de qualité : pour un facteur de qualité de quelques 1000 (correspondant à un vide primaire), des tensions de l'ordre de l'ordre de quelques volts conviennent, pour des facteurs de qualité très élevés, 50000-200000 par exemple, (vide très poussé), des tensions de 10-100mV sont avantageuses.

Tous les points d'ancrage à une partie fixe du capteur ou substrat sont indiqués sous forme d'une croix dans cette figure. Une moitié des peignes, quatre dans cet exemple, sont fixes et ancrés au substrat. L'autre moitié des peignes est solidaire de la couronne extérieure afin de lui communiquer le mouvement d'oscillation. La **figure 3** montre une vue agrandie de ces peignes avec leur points d'ancrage 100 et la couronne extérieure 110 solidaire par la partie 162 de deux peignes mobiles.

Les autres points d'ancrage indiqués sur la figure 2 sont ceux des ressorts 150 qui assurent la liberté de mouvement d'oscillation dans le plan XY, autour de l'axe Z, à la première des masses du capteur c'est-à-dire la couronne extérieure 110. La **figure 4** est une vue agrandie, dans le plan XY d'un de ces ressorts. Deux points d'ancrage 100 sont situés de part et d'autre de chacun des ressorts 150. La seule liberté de mouvement de la couronne extérieure, autour de l'axe Z, est obtenue en réalisant de longs doigts flexibles 152 qui sont ancrés d'une part au substrat et d'autre part sont solidaires de la couronne extérieure 110 permettant un mouvement d'oscillation 112 dont l'amplitude est typiquement de quelques microns (10⁻⁶ mètre). Comme on peut le voir sur la vue en perspective, les ressorts 150 sont épais et donc par ailleurs rigides afin qu'ils ne puissent se déformer dans une direction autre que celle pour laquelle ils ont été conçus, c'est-à-dire pour seulement permettre une rotation dans le plan XY autour de l'axe Z.

La figure 2 montre aussi tous les ressorts 170 qui lient la première et la deuxième masse, c'est-à-dire, dans cet exemple, la couronne extérieure 110 et la couronne intermédiaire 120. Ici au nombre de huit, ils ont pour rôle comme déjà mentionné précédemment de transmettre le mouvement d'excitation à la couronne intermédiaire en permettant toutefois à celle-ci d'acquérir deux degrés de liberté supplémentaires en oscillation autour des axes X et Y. A cette fin, la moitié, quatre dans cet exemple, sont disposés dans la direction de l'axe X et les quatre autres dans la direction de l'axe Y. Ces ressorts sont donc rigides dans le plan XY et souples hors plan, c'est-à-dire selon l'axe Z.

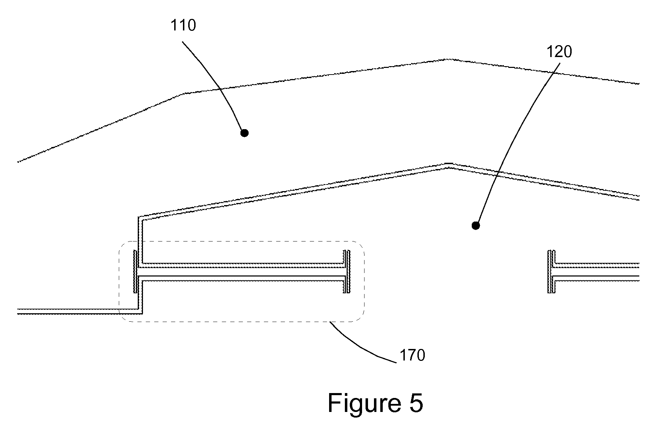

La **figure 5** est une vue agrandie de l'un de ces ressorts 170 conçus pour transmettre le mouvement d'oscillation autour de l'axe Z à la couronne intermédiaire 120 tout en permettant à cette dernière d'être soumise aux forces de Coriolis et d'autoriser aussi un mouvement de déformation, orthogonal au plan XY dans lequel ils sont représentés, forces apparaissant lorsque le capteur est lui-même soumis à une rotation, autour de l'axe X, autour de l'axe Y ou des deux à la fois, en raison des mouvements du dispositif dans lequel il est intégré. Mouvements que l'on désire détecter avec le capteur.

La figure 2 montre également les ressorts 190 assurant la liaison entre la deuxième et la troisième des trois masses d'un capteur inertiel selon ce premier mode de réalisation. Ces ressorts destinés à ne transmettre à la troisième masse que les mouvements résultants des forces de Coriolis sont, comme ceux 150 de la couronne extérieure, souples dans le plan XY et rigides hors plan, selon Z. Ils sont donc réalisés d'une manière identique à ce qui est montré figure 4.

D'une façon générale, entre la couronne extérieure 110 constituant l'élément d'excitation et la troisième masse constituant l'élément de détection, des moyens de liaison assurent cette transmission sélective entre les deux éléments. Dans le mode de réalisation ici décrit, une couronne intermédiaire 120 participe aux moyens de liaison de sorte à procurer un découplage affiné entre l'élément d'excitation et l'élément de détection, l'objectif étant que la force de Coriolis soient au moins en partie transmise sans que des mouvements ou efforts additionnels ne viennent perturber la détection.

Ici, la troisième des masses sismiques, constituée par la couronne centrale 130, est ancrée au substrat et ne peut se mouvoir autour de l'axe Z. Dans cet exemple de mise en oeuvre de l'invention il y a huit ancrages répartis comme indiqué par les huit croix correspondantes. La couronne centrale est liée à ces ancrages par des ressorts 180 rigides dans le plan XY et souple selon l'axe Z. La couronne centrale a donc seulement deux degrés de liberté en rotation autour des axes X et Y pour ne transmettre aux jauges piézoélectriques, par l'intermédiaire des quatre doigts intérieurs 140, que les seuls mouvements engendrés par les forces de Coriolis qui se développent lorsque le capteur subit des rotations suivant ces deux axes x, y.

La **figure 6** est une vue agrandie d'une partie de la couronne centrale 130 et de ses liaisons 190 avec la couronne intermédiaire 120. Les points d'ancrage 100 de la couronne centrale 130 et la présence des ressorts 190 empêchent la transmission des mouvements oscillants 192 dans le plan XY depuis la couronne intermédiaire. La troisième masse sismique, c'est-à-dire la couronne centrale 130 faisant office d'élément de détection, a donc uniquement deux degrés de liberté en rotation autour des axes X et Y.

Les jauges de contrainte suspendues 142 sont connectées d'un côté aux poutres intérieures 140 solidaires de la couronne centrale 130 et de l'autre côté sont ancrées au substrat 144 situé dans la partie fixe et à un plot de contact individuel permettant la mesure de la résistance électrique de chaque jauge. Les jauges sont faites d'un matériau piézorésistif. Le silicium, qui est le matériau de base pour la réalisation des MEMS, convient. Le placement des jauges est discuté dans la figure ci-après.

La **figure 7** est une vue en coupe, par exemple selon l'axe 146 sur la figure 6, d'une paire de jauges piézorésistives. Paire de jauges avantageusement utilisée en mode différentiel qui permet de s'affranchir des déformations parasites identiques qui affecteraient les deux brins 142 pour mieux mesurer les variations opposées de résistance dues à la compression d'un brin et à l'extension de l'autre en raison de la rotation du doigt 140 sous l'action des forces de Coriolis transmises à la couronne centrale 130 et aux poutres intérieures.

La position des jauges a un décalage 148 suivant l'axe Z par rapport à l'axe de rotation 149 de la troisième masse, la couronne centrale. L'axe de rotation 149 est au milieu de la couche épaisse constituant la partie oscillante. Le décalage 148 réalise un bras de levier qui amplifie le mouvement d'oscillation. Dans le cas d'une rotation, par exemple autour de l'axe X, la force de Coriolis induite dans la troisième masse génère une contrainte en tension/compression sur les jauges orientées suivant l'axe X, due à une oscillation des masses de détection suivant l'axe Y.

Les jauges piézorésistives sont de préférence de section la plus faible possible. Elles ont typiquement une section de l'ordre inférieure au micron afin d'avoir une concentration de contrainte dans la jauge aussi élevée que possible et ainsi amplifier les effets piézorésistifs.

Il est avantageux de positionner les jauges avec attention pour minimiser les interférences entre les axes de rotation dont les détections doivent idéalement rester indépendantes. Lorsque une rotation est détectée, par exemple selon X, le capteur inertiel (ou plus précisément la ou les masses de détection) oscille autour de l'axe Y et met en tension/compression les jauges associées à cet axe de détection. La contrainte en tension/compression sur ces jauges entraîne une modification de leur résistivité, ce qui permet de remonter à la force de Coriolis. Cependant, lors de ce mouvement, les jauges associées à la détection des rotations selon Y peuvent subir un mouvement vertical si elles ne sont pas au centre de la structure (le mouvement est seulement un mouvement de torsion si les poutres 140 sont parfaitement au centre). Ce mouvement vertical les déforme en flexion ce qui peut avoir une faible incidence sur les variations de résistivité de la jauge. En outre, les jauges sont déformées de la même manière en flexion, alors qu'elles sont déformées de manière différentielle lors de la détection d'une rotation. Le demandeur a noté qu'il est avantageux de les mettre le plus au centre possible afin que cette déformation parasite en flexion :
- ne compromette pas l'intégrité de la jauge qui peut casser en cas de déformation trop importante ;
- génère un signal parasite le plus petit possible ;
- ait une incidence la plus limitée possible sur la sensibilité lorsqu'il faut détecter des composantes de rotation selon les deux axes.

Enfin, les jauges sont aussi préférentiellement disposées de manière différentielle et symétrique par rapport aux axes de rotation des modes de détection. Ceci afin que la raideur des jauges associées à un axe ne vienne pas perturber de manière dissymétrique le mouvement de détection selon l'autre axe, ce qui entraînerait un couplage entre modes et une interférence entre axes.

Pour minimiser la déformation en flexion des jauges, il peut être intéressant d'asservir le capteur inertiel en détection. Cela n'élimine pas la problématique des interférences entre axes mais réduit les risques de cassure et de comportement non linéaire.

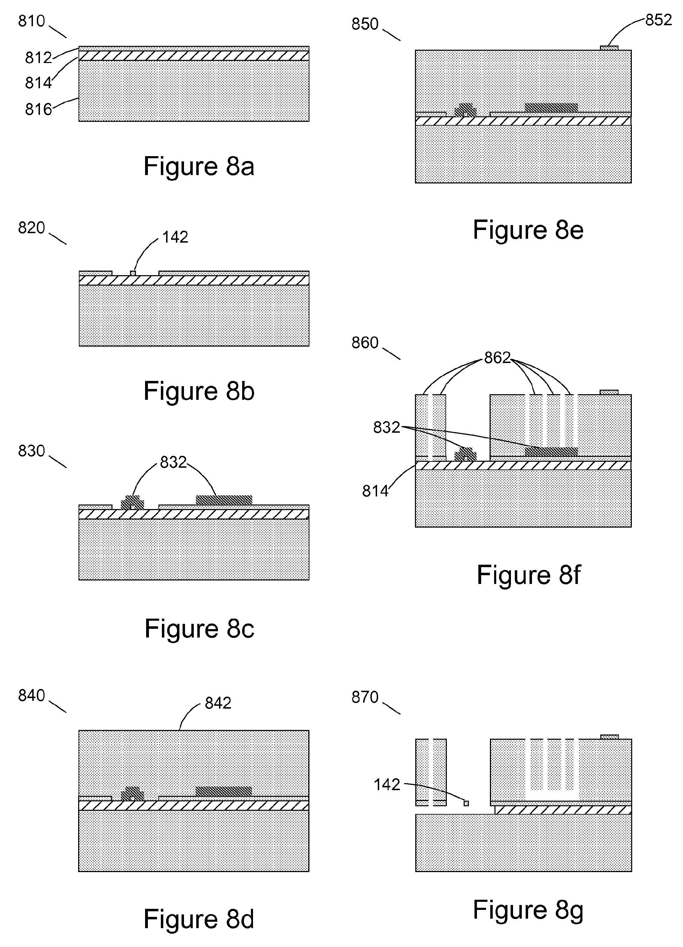

Les **figures 8a à 8g** décrivent les étapes principales d'un procédé de réalisation de MEMS compatible avec la fabrication de capteurs inertiels selon l'invention. Les étapes du procédé mettent potentiellement en oeuvre toutes les techniques connues (photolithographie, gravure, dépôt de matériaux de toutes sortes, etc.) et méthodes de fabrication mises au point par l'industrie de la microélectronique pour la fabrication des circuits intégrés et des dispositifs électromécaniques de type MEMS.

Le matériau de départ est un substrat élaboré 810 dit SOI de l'anglais « silicon on insulator » comportant en surface une couche mince de silicium monocristallin 812 isolé par une couche d'oxyde 814 du substrat 816. Ce type de substrat élaboré est souvent utilisé pour la fabrication de MEMS.

L'étape suivante 820 consiste à graver dans la couche de silicium monocristallin 812 la partie dite mince du capteur. C'est dans cette couche que l'on réalise notamment les jauges piézoélectriques 142.

À l'étape suivante 830, on procède à un dépôt d'oxyde et à la gravure de motifs 832 qui serviront de protection lors des opérations de libération des parties mobiles du MEMS décrites plus loin.

À l'étape 840, on procède à une épitaxie épaisse de silicium afin d'obtenir la couche 842 dans laquelle les parties fixes et mobiles du capteur seront réalisées.

À l'étape 850, on dépose un métal, par exemple de l'aluminium, ce qui permet après gravure de former toutes les interconnexions électriques 852 nécessaires.

Une gravure profonde du silicium est ensuite réalisée à l'étape 860 qui permet, dans la couche épaisse 842, de délimiter les parties mobiles 862, notamment les trois masses du capteur inertiel de l'invention avec ses ressorts. La gravure se fait jusqu'à l'arrêt sur une couche d'oxyde. Par exemple sur les motifs de protection 832 délimités précédemment à l'étape 830. La couche d'oxyde 814 du substrat SOI sert aussi de couche d'arrêt là où aucun motif de protection n'a été formé.

La libération des parties mobiles se fait à l'étape suivante 870, en dissolvant les parties des couches d'oxyde dites sacrificielles, là où elles sont devenues accessibles après la gravure profonde. On obtient ainsi la structure représentée où les parties mobiles sont libérées (il n'y a plus d'oxyde sous jacent). Les jauges piézorésistives suspendues 142 réalisées dans la couche mince 812 sont également libérées pour pouvoir être mises en tension/compression par la troisième masse, la couronne centrale 130 du capteur, comme expliqué précédemment.

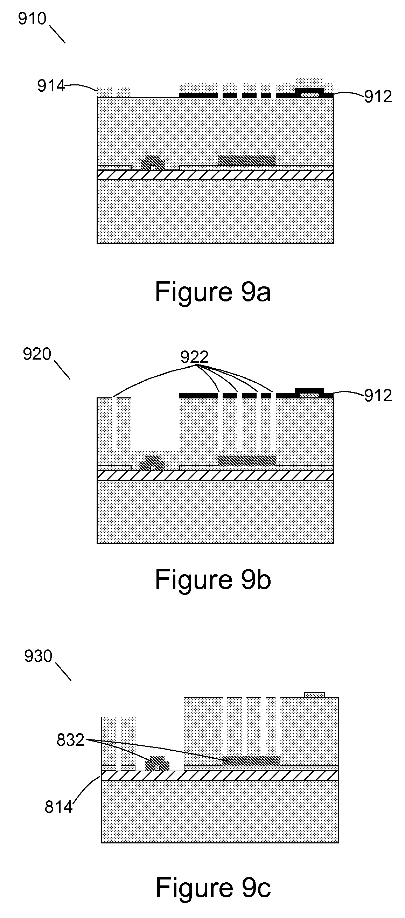

Les **figures 9a à 9c** décrivent les étapes supplémentaires d'un procédé de réalisation du capteur qui permettent d'obtenir des épaisseurs différentes pour la réalisation des parties mécaniques. Cela peut être avantageux, par exemple, pour ajuster la rigidité des ressorts décrits précédemment.

Pour obtenir deux épaisseurs différentes dans la couche épaisse où l'on réalise les parties mécaniques, après l'étape 850 de la figure 8, on dépose et on délimite en surface, à l'étape 910, un masque dur 912 par lithographie et gravure d'un matériau approprié, par exemple de l'oxyde de silicium. La résine 914 sert de protection pour les parties du mécanisme dont l'épaisseur ne doit pas être réduite, lors d'une première étape 920 de gravure profonde des motifs 922. Lors d'une seconde étape de gravure profonde 930, après enlèvement du masque résine 914, on termine la gravure profonde à travers le masque dur 912 avec arrêt sur les couches d'oxyde 832 et 814 comme à l'étape 860 de la figure 8. On obtient ainsi, dans cet exemple, deux épaisseurs différentes des parties mécaniques. Plus de deux épaisseurs peuvent évidemment être réalisées en répétant les étapes précédentes.

Dans la description précédente des procédés de réalisation d'un capteur selon l'invention il est seulement fait référence à l'utilisation de couches de silicium. Cependant, pour la couche mince 812, tout matériau de type conducteur ou semi-conducteur présentant, lorsque les jauges sont piézorésistives, des propriétés piézorésistives peut être utilisé. Outre le silicium (Si) on peut utiliser, par exemple, un composé silicium/germanium (SiGe). Ces matériaux peuvent être utilisés sous une forme mono ou poly cristalline. Pour la couche épaisse 842, tout type de matériau conducteur ou semi-conducteur peut aussi être potentiellement employé. La couche épaisse peut être déposée par tout type de moyen de dépôt employé en microélectronique et pas seulement par épitaxie comme indiqué ci-dessus. Les matériaux utilisés pour la couche mince et la couche épaisse peuvent être différents.

Le matériau de protection de la couche mince et celui de la couche sacrificielle sous la couche mince indiqués ci-dessus est le plus souvent de l'oxyde de silicium (SiO₂). D'autres matériaux peuvent être utilisés. Ceux-ci doivent pouvoir être gravés de manière sélective par rapport aux matériaux des couches minces et épaisses et, préférentiellement, la gravure profonde des couches épaisses et fines doit être sélective par rapport à ce matériau sacrificiel.

Comme on le voit sur les figures 8 et 9, la couche mince 812 peut être utilisée non seulement pour réaliser les jauges piézorésistives comme expliqué précédemment mais aussi, optionnellement pour former d'autres moyens/organes électriquement conducteurs du capteur. La couche 812 peut ainsi être employée.
- comme un niveau électriquement conducteur passant sous les parties mobiles ;
- comme électrode capacitive horizontale pouvant servir à la mise en oeuvre d'un circuit électronique de contre-réaction ou pour l'ajustage de la fréquence de résonance des masses sismiques ou pour permettre une détection capacitive hors plan.

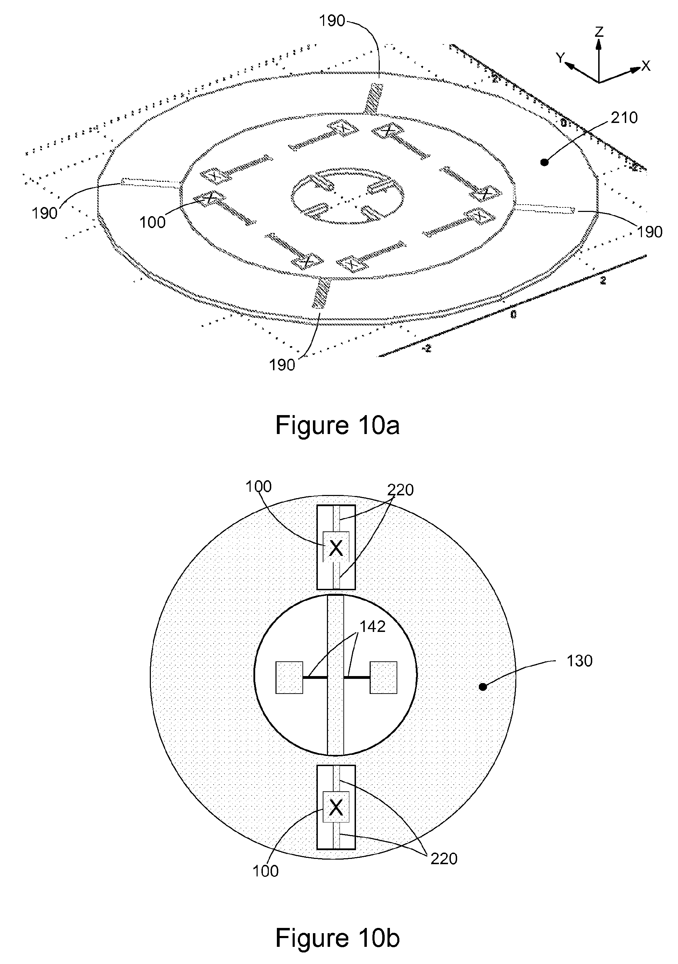

Les **figures10a et 10b** envisagent des variantes de mise en oeuvre d'un capteur inertiel selon l'invention sur la base des remarques suivantes :
- première et seconde masses sismiques, c'est-à-dire les couronnes extérieure 110 et intermédiaire 120 peuvent optionnellement être confondues en une même couronne 210 formant l'élément d'excitation. On utilise des ressorts extérieurs souples à la fois dans le plan et hors du plan ou on n'ancre pas cette couronne directement au substrat comme montré sur la figure 10a ou la masse 210 est soutenue par l'intermédiaire des ressorts 190 qui la lient uniquement à la masse de détection 130. Cette masse unique 210 acquiert alors trois degrés de liberté en rotation selon les axes X, Y et Z. Les seuls points d'ancrage restants sont ceux de la couronne centrale 130.
- Cette solution peut s'appliquer pour un seul axe de détection X ou Y. Il suffit dans ce cas de bloquer un des degrés de liberté suivant, respectivement, Y ou X. Comme montré sur la figure 10b, on peut bloquer un mode de détection en substituant aux ressorts d'ancrage de la couronne centrale 130, décrits précédemment, des ressorts faits de poutre en torsion 220.
- Les jauges de détection sont avantageusement connectées à la troisième masse, la couronne centrale 130, au plus près du plan vertical (suivant 2) contenant l'axe de rotation de cette masse de façon à ce qu'elles soient le plus possible soumises à des contraintes en tension/compression et le moins possible à des contraintes de flexion.
- Les jauges de contrainte 142 sont avantageusement réalisées en même temps que les connexions permettant de sortir leurs contacts et en même temps que de possibles électrodes de contre-réaction électrostatique.
- Comme déjà mentionné aux figures 9, il peut être intéressant d'amincir localement certaines parties mécaniques : par exemple les ressorts verticaux pour réduire leur raideur.

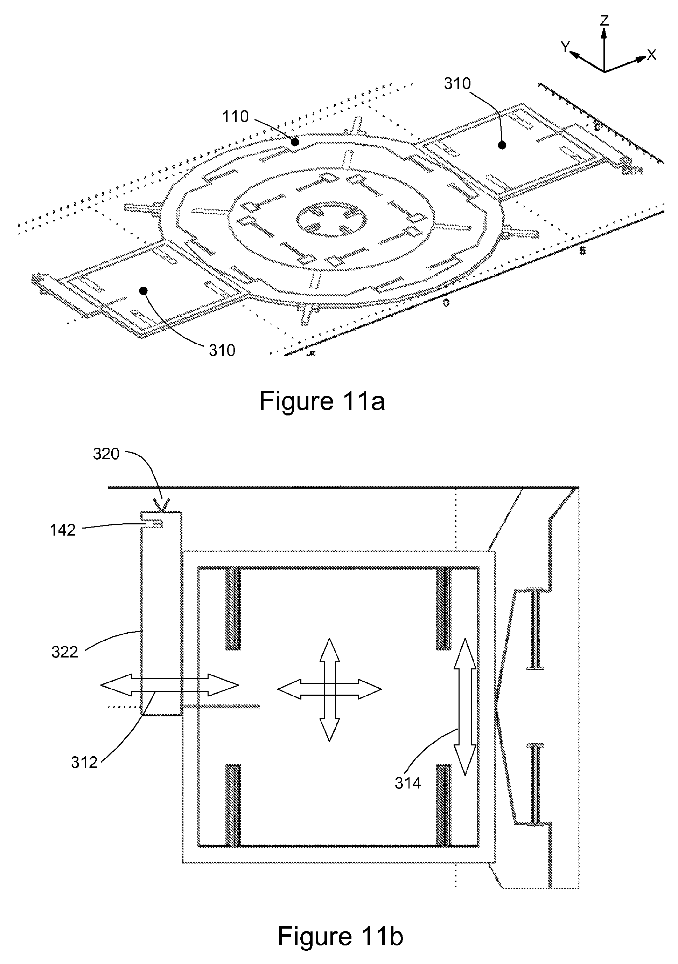

Les **figures 11a à 11f** décrivent une variante à trois axes de détection de l'invention.

Comme expliqué notamment dans les figures 1 à 4, la première masse 110 des trois masses d'un capteur inertiel selon l'invention fournit un mouvement dans le plan XY et n'a pas de mouvement hors plan. On peut donc y accoler, comme montré sur la figure 11a, une masse additionnelle 310 qui sera mise en vibration, par exemple, selon Y. On lui laisse aussi un degré de liberté selon X. Elle sera capable de ressentir une force de Coriolis générée par une rotation autour de l'axe Z.

Cette force de Coriolis peut être mesurée par toute sorte de méthodes de détection en particulier à l'aide de jauges piézorésistives suspendues comme décrit précédemment pour la détection selon les axes X et/ou Y.

La structure de base à trois masses comprenant une masse n'ayant de degré de liberté qu'en excitation, et donc pas de mouvement hors plan, est particulièrement avantageuse lorsqu'on cherche à réaliser une structure pouvant mesurer 3 axes, étant donné qu'en utilisant cette première masse pour la partie excitation de la mesure selon Z, on minimise les risques de couplage mécanique entre les axes X/Y d'une part et Z d'autre part.

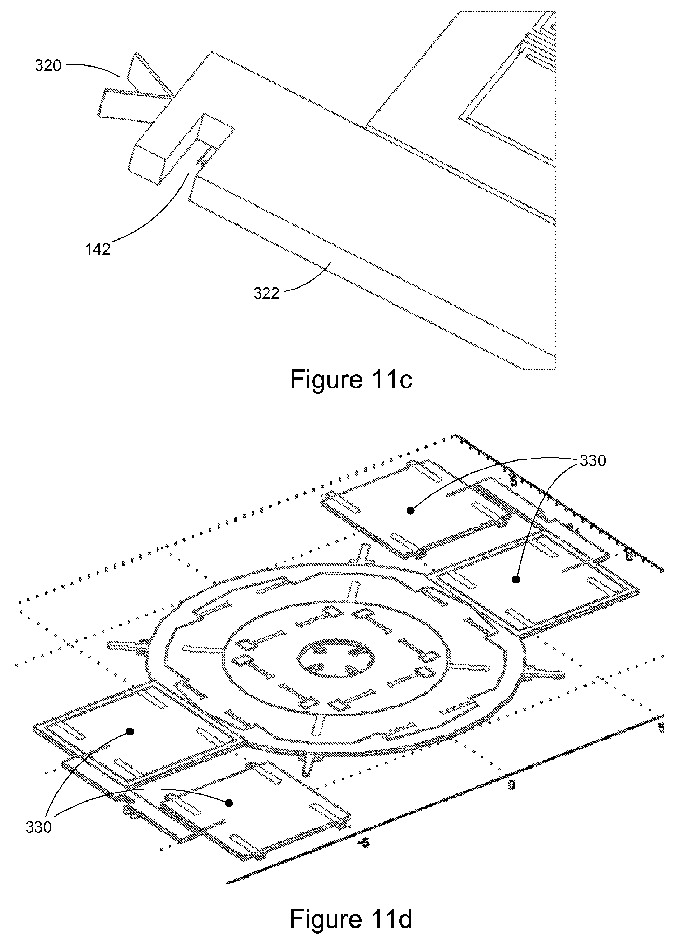

Les figures 11b et 11c montrent un agencement d'une jauge de détection piézorésistive 142 des mouvements 312 engendrés par les forces de Coriolis subies par la masse 310 dont les mouvements d'excitation sont appliqués dans une direction orthogonale 314. La détection des mouvements se fait autour d'un pivot 320. La partie 322 constitue un bras d'amplification des mouvements à détecter.

Ainsi ajouté, le module de détection de l'axe Z est très sensible aux accélérations selon X. Pour pallier ce problème, on réalise, comme le montre la figure 11a, une mesure différentielle avec une masse en deux parties 310 excitées en opposition de phase puisque de part et d'autre du disque 110. Ceci permet de distinguer la contribution de la force de Coriolis (en opposition de phase) de l'accélération (mouvement des deux masses identiques). Les deux parties de la masse 310 sont avantageusement symétriques suivant l'axe Z par ailleurs avantageusement axe de symétrie des autres masses dont la masse de détection 130.

Dans cet exemple de mise en oeuvre, les mouvements d'excitation en opposition de phase sont situés à l'opposé du disque. Disposées comme montré sur les figures 11b et 11c, les deux parties de la masse de la partie sensible à l'axe Z sont actionnées en opposition de phase. On peut distinguer la contribution de l'accélération (jauges déformées en opposition de phase) de celle de la force de Coriolis (jauges déformées en phase).

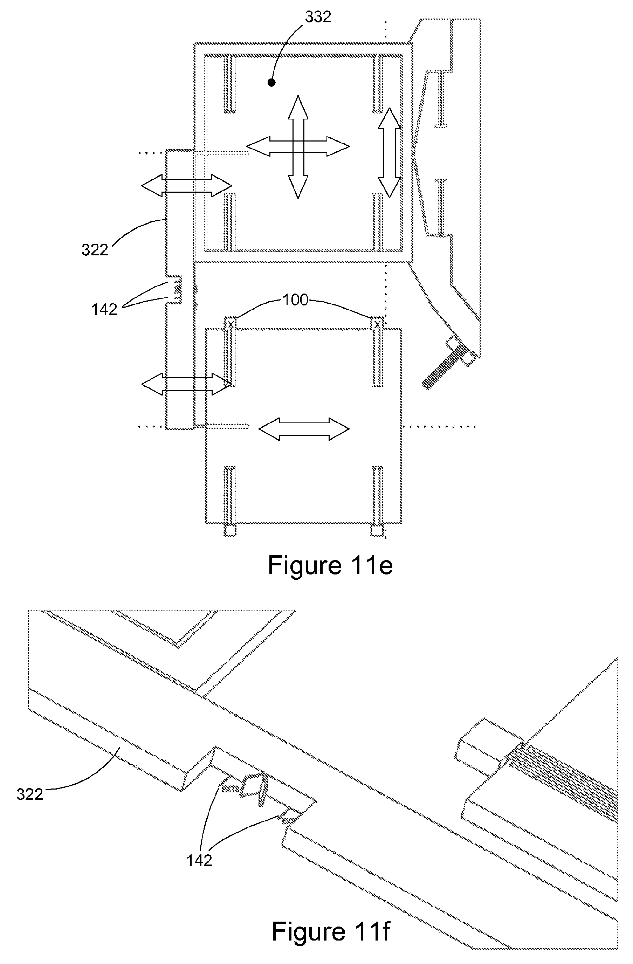

Pour rendre chaque structure moins sensible aux accélérations, on peut réaliser, comme le montrent les figures 11d, 11e et 11f, une « fausse » double masse sur chaque partie afin de contrebalancer la force d'accélération sur la masse de détection et d'équilibrer la structure selon l'axe X. Dans ces deux cas, les deux parties de la masse 310 de détection suivant Z comportent chacune deux masses 330. Une seule portion de masse 332 est alors en mouvement d'excitation (l'autre est ancrée par des points d'ancrage 100). La sensibilité aux accélérations décroît d'autant plus que le bras d'amplification 322 contenant les jauges de détection 142 est rigide.

Dans cet exemple de mise en oeuvre on pourra observer la présence de certains effets parasites dont les effets peuvent cependant être éliminés :
- le mouvement en excitation n'est pas parfaitement linéaire (mouvement en rotation d'un disque sur un angle cependant faible), ceci a pour conséquence qu'une partie du mouvement va pouvoir se transmettre selon X et perturber la mesure. Cependant, comme cette contribution est à une fréquence double de celle du signal de Coriolis elle peut être aisément filtrée.
- Une autre conséquence est la présence d'une force centrifuge proportionnelle au carré de la vitesse. Comme elle apporte aussi une contribution à fréquence double elle peut aussi être filtrée dans les mêmes conditions.
- La structure est équilibrée au repos (sans mouvement d'excitation), toutefois, lorsque l'une des masses est excitée, la position de son centre de gravité par rapport au pivot va se déplacer et les deux moments issus des forces d'accélération sur les deux masses 330 ne se compensent plus exactement. Ceci apportera une contribution proportionnelle au déplacement, qui sera cependant en quadrature avec le signal de Coriolis (proportionnel à la vitesse) et pourra donc être démodulée du signal de Coriolis.

## Revendications

1. Micro-capteur inertiel de mouvement de rotation pour la détection d'un mouvement rotationnel autour d'un axe dit de rotation (X), comportant une partie mobile par rapport à une partie fixe, la partie mobile comprenant :
- une masse d'excitation (110, 210) configurée pour subir un mouvement d'oscillation autour d'un axe dit d'excitation (Z) par des moyens d'excitation de sorte à générer une force de Coriolis induite par le mouvement rotationnel,
- une masse de détection (130) cinématiquement reliée à la masse d'excitation par des moyens de liaison configurés pour transmettre au moins en partie la force de Coriolis et pour ne pas transmettre au moins en partie le mouvement d'oscillation autour de l'axe d'excitation (Z), et ayant un degré de liberté en rotation autour d'un axe (Y) dit d'oscillation, perpendiculaire à l'axe de rotation (X),
- des moyens de détection configurés pour mesurer la force de Coriolis transmise à la masse de détection (130),
**caractérisé en ce que** les moyens de détection comportent au moins une jauge de contrainte (142) suspendue entre la masse de détection (130) et une partie d'ancrage solidaire de la partie fixe et **en ce que** la au moins une jauge de contrainte (142) est reliée à la masse de détection (130) à un niveau de hauteur, suivant l'axe d'excitation (Z), différent de celui de l'axe d'oscillation (Y) de la masse de détection (130).

2. Micro-capteur selon la revendication précédente dans lequel au moins une jauge de contrainte (142) est une jauge piezorésistive.

3. Micro-capteur selon l'une des revendications précédentes dans lequel la partie fixe comporte un substrat à partir duquel est réalisée tout ou partie de la partie mobile, la jauge de contrainte (142) s'étendant dans un plan parallèle au plan du substrat, dans une direction parallèle à l'axe de rotation (X).

4. Micro-capteur selon la revendication précédente dans lequel la masse de détection (130) est superposée à la partie fixe suivant l'axe d'excitation (Z) et comporte une face interne en vis-à-vis d'une face de la partie fixe, la jauge de contrainte (142) étant localisée dans le prolongement de la face interne.

5. Micro-capteur selon l'une des revendications précédentes comportant une masse mobile intermédiaire (120) reliée à la masse d'excitation (110, 210) de sorte à subir au moins partiellement le mouvement d'oscillation autour de l'axe d'excitation (Z) et la force de Coriolis, reliée à la masse de détection (130) de sorte à transmettre au moins partiellement la force de Coriolis et à être mobile en rotation solidairement de la masse de détection (130) suivant son axe d'oscillation (Y).

6. Micro-capteur selon l'une des revendications précédentes dans lequel la jauge de contrainte (142) est suspendue à la partie d'ancrage solidaire de la partie fixe par l'intermédiaire d'un contact électrique individuel.

7. Micro-capteur selon l'une des revendications précédentes dans lequel la masse de détection (130) comporte un trou (147) au droit duquel est suspendue la au moins une jauge de contrainte.

8. Micro-capteur selon la revendication précédente dans lequel la masse de détection (130) présente une symétrie axiale suivant l'axe d'excitation (Z), le trou (147) étant localisé au centre de la masse de détection (130).

9. Micro-capteur selon la revendication précédente dans lequel la masse de détection (130) comporte une série de poutres comportant au moins une poutre (140) faisant saillie vers l'intérieur du trou (147) et à laquelle est reliée la jauge de contrainte.

10. Micro-capteur selon la revendication précédente dans lequel la poutre (140) est orientée suivant l'axe d'oscillation (Y) de la masse de détection (130).

11. Micro-capteur selon la revendication précédente dans lequel la masse de détection (130) comporte une deuxième jauge de contrainte reliée à la poutre (140) en symétrie de la première jauge de contrainte (142) par rapport à l'axe d'oscillation (Y) de la masse de détection (130).

12. Micro-capteur selon l'une des trois revendications précédentes dans lequel la série de poutres comporte une deuxième poutre (140) pour former une paire de poutres (140) et comprenant au moins une jauge de contrainte (142) reliée à la deuxième poutre (140), ladite deuxième poutre (140) et ladite au moins une jauge de contrainte (142) étant symétriques respectivement de la première poutre (140) et de la au moins une jauge de contrainte (142) reliée à la première poutre (140), selon l'axe de symétrie de la masse de détection (130).

13. Micro-capteur selon l'une des revendications précédentes dans lequel la masse d'excitation (110, 210) et l'élément de détection (130) sont configurées pour générer et transmettre une deuxième force de Coriolis induite par un mouvement rotationnel autour d'un deuxième axe de rotation (Y) perpendiculaire à l'axe de rotation (X), le micro-capteur comportant des deuxièmes moyens de détection configurés pour mesurer la deuxième force de Coriolis transmise à la masse de détection (130), la masse de détection (130) ayant un degré de liberté en rotation autour d'un deuxième axe (X) dit d'oscillation.

14. Micro-capteur selon la revendication précédente en combinaison avec la revendication 5 dans lequel la masse intermédiaire (120) a un degré de liberté en rotation autour du deuxième axe (X) dit d'oscillation.

15. Micro-capteur selon l'une des deux revendications précédentes en combinaison avec l'une des revendications 9 à 12, dans lequel la masse de détection (130) comporte une deuxième série de poutres (140) tournée de 90° par rapport à la première série de poutres (140) autour du point d'intersection des premier et deuxième axes d'oscillation (X,Y) de la masse de détection 130 et dans lequel les deuxièmes moyens de détection comportent des jauges piézo résistives tournées de 90° par rapport aux jauges piézo résistives des premiers moyens de détection autour du point d'intersection des premier et deuxième axes d'oscillation (X,Y) de la masse de détection (130).

16. Micro-capteur selon l'une des revendications précédentes dans lequel la masse d'excitation (110, 210) entoure la masse de détection (130).

17. Micro-capteur selon l'une des revendications précédentes comportant :
- une masse additionnelle (310) reliée à la masse d'excitation (110, 210) de sorte à présenter un mouvement de vibration suivant une direction perpendiculaire à l'axe d'excitation (Z) et de sorte à générer une force de Coriolis induite par un mouvement de rotation de la masse additionnelle (310) suivant l'axe d'excitation (Z),
- des moyens de détection additionnels configurés pour mesurer la force de Coriolis induite par un mouvement de rotation de la masse additionnelle (310) suivant l'axe d'excitation (Z).

18. Micro-capteur selon la revendication précédente dans lequel la masse additionnelle (310) présente deux parties réalisées symétriquement par rapport à l'axe d'excitation (Z), les moyens de détection additionnels coopérant avec les deux parties de la masse additionnelle (310) pour opérer une mesure différentielle de la force de Coriolis induite par le mouvement de rotation de la masse additionnelle suivant l'axe d'excitation (2).

19. Micro-capteur selon la revendication précédente dans lequel chaque partie de la masse additionnelle (310) comporte une portion (332) configurée pour subir le mouvement de vibration et une portion ancrée à la partie fixe de sorte à ne pas subir le mouvement de vibration, les deux parties étant reliées par un bras (322), les moyens de détection additionnels comportant au moins une jauge de contrainte sur chaque bras (322).

20. Micro-capteur selon l'une des revendications précédentes consistant en un système micro électromécanique.

21. Micro-capteur selon la revendication précédente dans lequel la au moins une jauge de contrainte (142) comprend une strate de matériau électriquement conducteur ayant des propriétés piézo résistives.

22. Micro-capteur selon la revendication précédente dans lequel la strate de matériau est obtenue par gravage dans une couche de matériau et dans lequel au moins un organe électriquement conducteur est aussi obtenu par gravage dans ladite couche de matériau.

## Patentansprüche

1. Rotationsbewegungs-Mikroträgheitssensor für die Erfassung einer Rotationsbewegung um eine sogenannte Rotationsachse (X), umfassend einen im Verhältnis zu einem feststehenden Teil beweglichen Teil, wobei der bewegliche Teil Folgendes aufweist:
- eine Erregermasse (110, 210), die dazu ausgestaltet ist, eine Oszillationsbewegung um eine sogenannte Erregerachse (Z) durch Erregermittel dergestalt zu erfahren, dass eine Corioliskraft erzeugt wird, die durch die Rotationsbewegung bewirkt wird,
- eine Erfassungsmasse (130), die kinematisch mit der Erregermasse durch Verbindungsmittel verbunden ist, die dazu ausgestaltet sind, mindestens einen Teil der Corioliskraft zu übertragen und um mindestens einen Teil der Oszillationsbewegung um die Erregerachse (Z) nicht zu übertragen, und einen Freiheitsgrad bei der Rotation um eine sogenannte Oszillationsachse (Y) senkrecht zu der Rotationsachse (X) aufweisen,
- Erfassungsmittel, die dazu ausgestaltet sind, die Corioliskraft zu messen, die an die Erfassungsmasse (130) übertragen wird,
**dadurch gekennzeichnet, dass** die Erfassungsmittel mindestens eine Dehnungsmessvorrichtung (142) umfassen, die zwischen der Erfassungsmasse (130) und einem Verankerungsteil aufgehängt ist, der mit dem feststehenden Teil fest verbunden ist, und dass die mindestens eine Dehnungsmessvorrichtung (142) mit der Erfassungsmasse (130) auf einer Höhe gemäß der Erregerachse (Z) verbunden ist, die von derjenigen der Oszillationsachse (Y) der Erfassungsmasse (130) verschieden ist.

2. Mikrosensor nach dem vorhergehenden Anspruch, wobei es sich bei der mindestens einen Dehnungsmessvorrichtung (142) um eine piezoresistive Messvorrichtung handelt.

3. Mikrosensor nach einem der vorhergehenden Ansprüche, wobei der feststehende Teil ein Substrat umfasst, von welchem ausgehend der gesamte bewegliche Teil oder ein Teil davon verwirklicht ist, wobei sich die Dehnungsmessvorrichtung (142) in einer Ebene parallel zu der Ebene des Substrats in eine Richtung parallel zu der Rotationsachse (X) erstreckt.

4. Mikrosensor nach dem vorhergehenden Anspruch, wobei die Erfassungsmasse (130) über dem feststehenden Teil gemäß der Erregerachse (Z) liegt und eine interne Fläche gegenüberliegend einer Fläche des feststehenden Teils umfasst, wobei die Dehnungsmessvorrichtung (142) sich in der Verlängerung der internen Fläche befindet.

5. Mikrosensor nach einem der vorhergehenden Ansprüche, eine bewegliche Zwischenmasse (120) umfassend, die mit der Erregermasse (110, 210) dergestalt verbunden ist, dass sie die Oszillationsbewegung um die Erregerachse (Z) mindestens teilweise erfährt, und die Corioliskraft, die mit der Erfassungsmasse (130) dergestalt verbunden ist, dass die Corioliskraft mindestens teilweise übertragen wird und drehbeweglich fest verbunden mit der Erfassungsmasse (130) gemäß seiner Oszillationsachse (Y) ist.

6. Mikrosensor nach einem der vorhergehenden Ansprüche, wobei die Dehnungsmessvorrichtung (142) an dem Verankerungsteil fest verbunden mit dem feststehenden Teil mittels eines einzelnen elektrischen Kontakts aufgehängt ist.

7. Mikrosensor nach einem der vorhergehenden Ansprüche, wobei die Erfassungsmasse (130) eine Öffnung (147) umfasst, wobei die mindestens eine Dehnungsmessvorrichtung direkt darunter aufgehängt ist.

8. Mikrosensor nach dem vorhergehenden Anspruch, wobei die Erfassungsmasse (130) eine axiale Symmetrie gemäß der Erregerachse (Z) aufweist, wobei sich die Öffnung (147) im Zentrum der Erfassungsmasse (130) befindet.

9. Mikrosensor nach dem vorhergehenden Anspruch, wobei die Erfassungsmasse (130) eine Reihe von Pfosten umfasst, die mindestens einen Pfosten (140) umfassen, der zum Inneren der Öffnung (147) hervorsteht und der mit der Dehnungsmessvorrichtung verbunden ist.

10. Mikrosensor nach dem vorhergehenden Anspruch, wobei der Pfosten (140) gemäß der Oszillationsachse (Y) der Erfassungsmasse (130) ausgerichtet ist.

11. Mikrosensor nach dem vorhergehenden Anspruch, wobei die Erfassungsmasse (130) eine zweite Dehnungsmessvorrichtung umfasst, die mit dem Pfosten (140) symmetrisch zu der ersten Dehnungsmessvorrichtung (142) im Verhältnis zu der Oszillationsachse (Y) der Erfassungsmasse (130) verbunden ist.

12. Mikrosensor nach einem der drei vorhergehenden Ansprüche, wobei die Reihe von Pfosten einen zweiten Pfosten (140) umfasst, um ein Pfostenpaar (140) zu bilden und mindestens eine Dehnungsmessvorrichtung (142) aufweisend, die mit dem zweiten Pfosten (140) verbunden ist, wobei der zweite Pfosten (140) und die mindestens eine Dehnungsmessvorrichtung (142) jeweils im Verhältnis zu dem ersten Pfosten (140) und der mindestens einen Dehnungsmessvorrichtung (142), die mit dem ersten Pfosten (140) verbunden ist, gemäß der Symmetrieachse der Erfassungsmasse (130) symmetrisch sind.

13. Mikrosensor nach einem der vorhergehenden Ansprüche, wobei die Erregermasse (110, 210) und das Erfassungselement (130) dazu ausgestaltet sind, eine zweite Corioliskraft, die durch eine Rotationsbewegung um eine zweite Rotationsachse (Y) senkrecht zu der Rotationsachse (X) bewirkt wird, zu erzeugen und zu übertragen, wobei der Mikrosensor zweite Erfassungsmittel umfasst, die dazu ausgestaltet sind, die zweite Corioliskraft zu messen, die an die Erfassungsmasse (130) übertragen wird, wobei die Erfassungsmasse (130) einen Freiheitsgrad bei der Rotation um eine zweite sogenannte Oszillationsachse (X) aufweist.

14. Mikrosensor nach dem vorhergehenden Anspruch in Kombination mit dem Anspruch 5, wobei die Zwischenmasse (120) einen Freiheitsgrad bei der Rotation um die zweite sogenannte Oszillationsachse (X) aufweist.

15. Mikrosensor nach einem der beiden vorhergehenden Ansprüche in Kombination mit einem der Ansprüche 9 bis 12, wobei die Erfassungsmasse (130) eine zweite Reihe von Pfosten (140) gedreht um 90° im Verhältnis zu der ersten Reihe mit Pfosten (140) um einen Schnittpunkt der ersten und zweiten Oszillationsachse (X, Y) der Erfassungsmasse (130) umfasst, und wobei die zweiten Erfassungsmittel die piezoresistiven Messvorrichtungen gedreht um 90 ° im Verhältnis zu den piezoresistiven Messvorrichtungen der ersten Erfassungsmittel um den Schnittpunkt der ersten und zweiten Oszillationsachse (X, Y) der Erfassungsmasse (130) umfassen.

16. Mikrosensor nach dem vorhergehenden Anspruch, wobei die Erregermasse (110, 210) die Erfassungsmasse (130) umschließt.

17. Mikrosensor nach dem vorhergehenden Anspruch, Folgendes umfassend:
- eine zusätzliche Masse (310), die mit der Erregermasse (110, 210) dergestalt verbunden ist, dass sie eine Vibrationsbewegung gemäß einer senkrechten Richtung zu der Erregerachse (Z) aufweist und dergestalt, dass eine Corioliskraft erzeugt wird, die durch eine Rotationsbewegung der zusätzlichen Masse (310) gemäß der Erregerachse (Z) bewirkt wird,
- zusätzliche Erfassungsmittel, die dazu ausgestaltet sind, die Corioliskraft zu messen, die durch eine Rotationsbewegung der zusätzlichen Masse (310) gemäß der Erregerachse (Z) bewirkt wird.

18. Mikrosensor nach dem vorhergehenden Anspruch, wobei die zusätzliche Masse (310) zwei Teile aufweist, die symmetrisch im Verhältnis zu der Erregerachse (Z) verwirklicht sind, wobei die zusätzlichen Erfassungsmittel mit den beiden Teilen der zusätzlichen Masse (310) zusammenwirken, um eine Differentialmessung der Corioliskraft vorzunehmen, die durch die Rotationsbewegung der zusätzlichen Masse gemäß der Erregerachse (Z) bewirkt wird.

19. Mikrosensor nach dem vorhergehenden Anspruch, wobei jeder Teil der zusätzlichen Masse (310) einen Abschnitt (332), der dazu ausgestaltet ist, die Vibrationsbewegung zu erfahren, und einen Abschnitt umfasst, der mit dem feststehenden Teil dergestalt verankert ist, dass die Vibrationsbewegung nicht erfahren wird, wobei die beiden Teile miteinander durch einen Arm (322) verbunden sind, wobei die zusätzlichen Erfassungsmittel mindestens eine Dehnungsmessvorrichtung an jedem Arm (322) umfassen.

20. Mikrosensor nach einem der vorhergehenden Ansprüche, aus einem mikroelektromechanischen System bestehend.

21. Mikrosensor nach dem vorhergehenden Anspruch, wobei die mindestens eine Dehnungsmessvorrichtung (142) eine Materialschicht aufweist, die elektrisch leitend ist und piezoresistive Eigenschaften aufweist.

22. Mikrosensor nach dem vorhergehenden Anspruch, wobei die Materialschicht durch Gravierung in eine Materialschicht erhalten wird, und wobei das mindestens eine elektrisch leitende Organ auch durch Gravierung in die genannte Materialschicht erhalten wird.

## Claims

1. Inertial rotary motion micro-sensor for detection of a rotary motion around a so-called axis of rotation (X), having a part which is mobile in relation to a fixed part, the mobile part comprising:
- an excitation mass (110, 210) configured so as to be exposed to an oscillatory motion around a so-called axis of excitation (Z) by excitation means so as to generate a Coriolis force induced by the rotary motion,
- a detection mass (130) connected cinematically to the excitation mass by connecting means configured so as to transmit the Coriolis force at least in part and not to transmit the oscillatory motion around the axis of excitation (Z) at least in part, and having a degree of freedom in rotation around a so-called axis of oscillation (Y), perpendicular to the axis of rotation(X),
- detection means configured so as to measure the Coriolis force transmitted to the detection mass (130),
**characterised in that** the detection means comprise at least one strain gauge (142) suspended between the detection mass (130) and an anchoring part locked to the fixed part, and **in that** the at least one strain gauge (142) is connected to the detection mass (130) at a height, in the axis of excitation (Z), different to that of the axis of oscillation (Y) of the detection mass (130).

2. Micro-sensor according to the preceding claim, in which at least one strain gauge (142) is a piezo resistive gauge.

3. Micro-sensor according to one of the preceding claims, in which the fixed part has a substrate from which all or part of the mobile part is made, the strain gauge (142) extending in a plane parallel to the plane of the substrate, in a direction parallel to the axis of rotation (X).

4. Micro-sensor according to the preceding claim, in which the detection mass (130) is superposed in relation to the fixed part in the axis of excitation (Z) and has an internal face facing the fixed part, the strain gauge (142) being located in the extension of the internal face.

5. Micro-sensor according to one of the preceding claims, having an intermediate mobile mass (120) connected to the excitation mass (110, 210) so as to be exposed at least partly to the oscillatory motion around the axis of excitation (Z) and the Coriolis force, connected to the detection mass (130) so as to transmit the Coriolis force at least partly and to be mobile in rotation locked to the detection mass (130) in its axis of oscillation (Y).

6. Micro-sensor according to one of the preceding claims, in which the strain gauge (142) is suspended from the anchoring part locked to the fixed part through the intermediary of an individual electrical contact.

7. Micro-sensor according to one of the preceding claims, in which the detection mass (130) has a hole (147) at right angles to which is suspended the at least one strain gauge.

8. Micro-sensor according to the preceding claim, in which the detection mass (130) exhibits an axial symmetry in the axis of excitation (Z), the hole (147) being located in the centre of the detection mass (130).

9. Micro-sensor according to the preceding claim, in which the detection mass (130) has a series of beams having at least one beam (140) projecting towards the interior of the hole (147) and to which is connected the strain gauge.

10. Micro-sensor according to the preceding claim, in which the beam (140) is oriented in the axis of oscillation (Y) of the detection mass (130).

11. Micro-sensor according to the preceding claim, in which the detection mass (130) has a second strain gauge connected to the beam (140) in symmetry with the first strain gauge (142) in relation to the axis of oscillation (Y) of the detection mass (130).

12. Micro-sensor according to one of the three preceding claims, in which the series of beams has a second beam (140) to form a pair of beams (140) and comprising at least one strain gauge (142) connected to the second beam (140), the said second beam (140) and the said at least one strain gauge (142) being symmetrical respectively with the first beam (140) and with the at least one strain gauge (142) connected to the first beam (140), in the axis of symmetry of the detection mass (130).

13. Micro-sensor according to one of the preceding claims, in which the excitation mass (110, 210) and the detection element (130) are configured so as to generate and transmit a second Coriolis force induced by a rotary motion around a second axis of rotation (Y) perpendicular to the axis of rotation (X), the micro-sensor having second detection means configured so as to measure the second Coriolis force transmitted to the detection mass (130), the detection mass (130) having a degree of freedom in rotation around a second so-called axis of oscillation (X).

14. Micro-sensor according to the preceding claim in combination with claim 5, in which the intermediate mass (120) has a degree of freedom in rotation around the second so-called axis of oscillation (X).

15. Micro-sensor according to one of the two preceding claims in combination with one of claims 9 to 12, in which the detection mass (130) has a second series of beams (140) turned through 90° in relation to the first series of beams (140) around the point of intersection of the first and second axes of oscillation (X, Y) of the detection mass (130) and in which the second detection means have piezo resistive gauges turned through 90° in relation to the piezo resistive gauges of the first detection means around the point of intersection of the first and second axes of oscillation (X, Y) of the detection mass (130).

16. Micro-sensor according to one of the preceding claims, in which the excitation mass (110, 210) surrounds the detection mass (130).

17. Micro-sensor according to one of the preceding claims, having:
- an additional mass (310) connected to the excitation mass (110, 210) so as to exhibit a vibratory motion in a direction perpendicular to the axis of excitation (Z) and so as to generate a Coriolis force induced by a rotary motion of the additional mass (310) in the axis of excitation (Z),
- additional detection means configured so as to measure the Coriolis force induced by a rotary motion of the additional mass (310) in the axis of excitation (Z).

18. Micro-sensor according to the preceding claim, in which the additional mass (310) exhibits two parts produced symmetrically in relation to the axis of excitation (Z), the additional detection means cooperating with the two parts of the additional mass (310) to effect a differential measurement of the Coriolis force induced by the rotary motion of the additional mass in the axis of excitation (2).

19. Micro-sensor according to the preceding claim, in which each part of the additional mass (310) has a portion (32) configured so as to be exposed to the vibratory motion and a portion anchored to the fixed part so as not to be exposed to the vibratory motion, the two parts being connected by an arm (322), the additional detection means having at least one strain gauge on each arm (322).

20. Micro-sensor according to one of the preceding claims, consisting of an electromechanical micro-system.

21. Micro-sensor according to the preceding claim, in which the at least one strain gauge (142) comprises a stratum of electrically conducting material having piezo resistive properties.

22. Micro-sensor according to the preceding claim, in which the stratum of material is obtained by etching in a layer of material and in which at least one electrically conducting element is also obtained by etching in the said layer of material.
